# EUROPÄISCHE PATENTSCHRIFT

(11) **EP 0 726 400 B1**
(45) Veröffentlichungstag und Bekanntmachung des Hinweises auf die Patenterteilung: **15.04.1998**
(21) Anmeldenummer: 95120736.4
(22) Anmeldetag: 29.12.1995
(51) Int. Cl.: F16B 21/08, B62D 25/24

(54) **Befestigungselement aus Kunststoff**
Plastic fastening device
Dispositif de fixation en matière plastique

(30) Priorität: 08.02.1995 DE 19504113
(43) Veröffentlichungstag der Anmeldung: 14.08.1996
(73) Patentinhaber: TRW United-Carr GmbH & Co. KG, 67677 Enkenbach-Alsenborn (DE)
(72) Erfinder: Kraus, Willi, D-67269 Grünstadt (DE)
(74) Vertreter: Schieschke, Klaus, Dipl.-Ing.

(56) Entgegenhaltungen:
- DE-A- 4 242 154
- FR-A- 1 357 504
- GB-A- 2 006 318
- US-A- 4 489 465
- US-A- 5 017 151

## Beschreibung

Die Erfindung bezieht sich auf ein Befestigungselement aus Kunststoff, mit einem in einer Öffnung eines Trägers befestigbaren Einsetzteil, welches am Außenumfang in Achslängsrichtung der Trägeröffnung verlaufende, über den Umfang verteilte, elastische Flügel aufweist, die dreieckförmig ausgebildet sind, wobei eine erste Dreieckseite mit einem Kern des Einsetzteils verbunden ist und die gegenüberliegende Dreieckspitze jeweils eine zweite und eine dritte, zur Dreieckspitze bzw. zum Kern des Einsetzteils zulaufende Dreieckseite begrenzt und mit einem mit dem Einsetzteil des oberen Bereich verbundenen, die Trägeröffnung überdeckende Verschlußteil.

Als Stand der Technik ist bereits ein derartiges Befestigungselement bekannt (DE-A- 4242 154), welches insbesondere als Verschlußdeckel ausgebildet ist. Dieser Verschlußdeckel dient z. B. zum Verschließen eines Kragenlochs in einer Kraftfahrzeugkarosserie und weist dementsprechend einen napfförmigen Teil auf. Die Flügel sind als Eingriffselemente ausgebildet, welche zumindest über einen Teilbereich im spitzen Winkel zu Radiallinien der zylindermantelförmigen Wand verlaufen. Mit Hilfe dieser Flügel wird der Verschlußdeckel innerhalb des Kragenlochs gehaltert.

Zum Stand der Technik zählt weiterhin eine Halterung eines Lampensockels (US-A- 5,037,326). Diese Halterung besitzt am Außenumfang einer zylindermantelförmige Wand Eingriffselemente in Form von schräg angeordneten Flügeln. Die Flügel haben hierbei die Funktion, den Lampensockel innerhalb einer Öffnung dadurch zu halten, daß die Außenflächen der Flügel gegen den Innenumfang einer Bohrung gepreßt werden. Ein Toleranzausgleich ist bei dieser bekannten Konstruktion nicht beabsichtigt.

Demgegenüber besteht die Aufgabe der vorliegenden Erfindung darin, ausgehend von dem eingangs genannten Befestigungselement diese Konstruktion so weiter zu bilden, daß bei leichter Eindrückkraft eine verbesserte Toleranzaufnahme bezüglich Blechstärke und Bohrung einer Trägeröffnung gewährleistet ist.

Diese Aufgabe wird erfindungsgemäß dadurch gelöst, daß die zweite Dreiecksseite des Flügels bis zur Dreieckspitze hin spiralförmig gewunden ansteigt und die dritte Dreieckseite des Flügels von der Dreieckspitze bis zum Kern des Einsetzteils spiralförmig gewunden abfällt. Hierdurch ergibt sich der Vorteil, daß infolge der besonderen spiralförmigen Form der als Eingriffselemente dienenden Flügel das Befestigungselement auf einfache Weise beispielsweise in eine Öffnung eines Trägers hineingedrückt wird und sich dort einlagert. Infolge der besonderen Gestaltung der Flügel können hierdurch verschiedene Bohrungen und Blechstärken erfaßt werden, so daß sich die Lagerhaltung in vorteilhafter Weise reduziert.

In weiterer Ausgestaltung der Erfindung kann zwischen der dritten Dreieckseite und der Unterseite des Verschlußteils ein sich zum Kern des Einsetzteils verringernder Abstand vorliegen. Hierdurch ist möglich, daß beispielsweise größere Blechstärken des Trägers erfaßt werden, woraus eine Erweiterung des Einsatzbereichs resultiert.

Nach einem anderen Merkmal der Erfindung kann das Verschlußteil mit einer umlaufenden, zum Einsetzteil geneigten Dichtlippe versehen sein, wobei das Schlußteil unterseitig mindestens zwei sich bis zum Kern des Einsetzteil erstreckende Radialstege aufweist.

Die Flügel können darüberhinaus jeweils mit einer Abschrägung im Endbereich versehen sein, so daß sich eine Verbesserung bei der Montage ergibt. Da die Flügel andererseits im Bereich der dritten Dreieckseite ebenfalls eine Abschrägung besitzen, ist gleichfalls eine vorteilhafte Demontagemöglichkeit gegeben.

Erfindungsgemäß können insgesamt sechs Flügel an dem Außenumfang des Kerns des Einsetzteils angeordnet sein. Weiterhin besteht die Möglichkeit, daß sich oberhalb des Verschlußteils ein Halte- und/oder Befestigungsbereich befindet, so daß sich hierdurch infolge besonderer Gestaltung ein weites Anwendungsfeld des erfindungsgemäßen Befestigungselements ergibt.

Die Erfindung wird nachfolgend anhand eines in der Zeichnung dargestellten Ausführungsbeispiels näher beschrieben. In der Zeichnung zeigen:
- Fig. 1 und 2: jeweils perspektivische Ansichten des erfindungsgemäßen Befestigungselements, teils von der Seite, teils von schräg unten,
- Fig. 3: eine Seitenansicht des erfindungsgemäßen Befestigungselements,
- Fig. 4: eine Unteransicht des erfindungsgemäßen Befestigungselements.

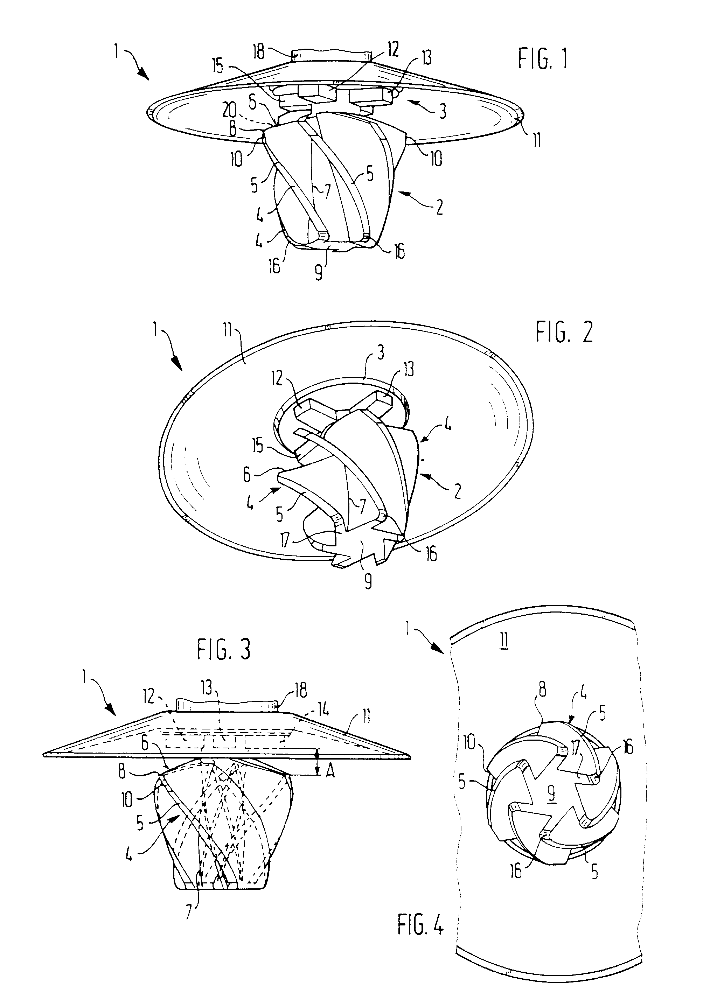

In den Fig. 1 bis 4 ist ein Befestigungselement 1 aus Kunststoff dargestellt, welches im wesentlichen aus einem Einsetzteil 2 sowie einem Verschlußteil 3 besteht. Das Einsetzteil 2 ist geeignet, in eine Öffnung eines nicht näher dargestellten Trägers eingesetzt zu werden. Dieses Einsetzteil 2 weist am Außenumfang in Achslängsrichtung der Trägeröffnung verlaufende, elastische Flügel 4 auf, welche über den Umfang verteilt sind.

Die Flügel 4 sind jeweils dreieckförmig ausgebildet, mit einer Dreieckspitze 8 sowie einer ersten Dreieckseite 7, einer zweiten Dreieckseite 5 und einer dritten Dreieckseite 6. Die Dreieckseite 7 ist hierbei mit einem Kern 9 des Einsetzteils 2 in spiralförmigen Verlauf verbunden, wobei die gegenüberliegende Dreieckspitze 8 einerseits in die zweite Dreieckseite 5 und andererseits in die dritte Dreieckseite 6 übergeht.

Die zweite Dreiecksseite 5 des Flügels 4 steigt hierbei erfindungsgemäß bis zur Dreieckspitze 8 spiralförmig gewunden an; die dritte Dreiecksseite 6 des Flügel 4 fällt von der Dreiecksspitze 8 bis zum Kern 9 des Einsetzteils 2 spiralförmig gewunden ab.

Insbesondere aus Fig. 1 und 3 ist erkennbar, daß die Dreieckspitze 8 jedes Flügels in eine Begrenzungskante 10 übergeht, an welcher die zweite Dreiecksseite 5 anschließt. Aus Fig. 3 ist erkennbar, daß zwischen der dritten Dreiecksseite 6 und der Unterseite des Verschlußteils 3 ein sich zum Kern 9 des Einsetzteils 2 verringernder Abstand A vorliegt.

Das Verschlußteil 3 kann insbesondere nach Fig. 1 und 2 unterseitig mehrere, sich bis zum Kern 9 des Einsetzteils 2 erstrekkende Radialstege aufweisen. Im vorliegenden Fall finden vier Radialstege 12, 13, 14 und 15 Anwendung, welche vom Kern 9 nach außen verlaufen.

Die Radialstege können jedoch auch vollkommen entfallen oder z. B. durch einen Zylinder ersetzt werden. Alternativ besteht die Möglichkeit, statt der Radialstege die obere Dreieckseite 6 mit einer Ausnehmung 20 zu versehen (sh. Fig. 1 gestrichelte Linie).

Durch die Gestaltung der Unterseite des Verschlußteils und dem Abstand A besteht die Möglichkeit, daß auch über einen größeren Toleranzbereich Träger mit verschiedenen Blechstärken sowie mit verschiedenen Durchmessern von Öffnungen zur Halterung des erfindungsgemäßen Befestigungselements dienen können.

Aus Fig. 1 und 2 ist erkennbar, daß jeder Flügel 4 im Endbereich der zweiten Dreiecksseite 5 mit einer Abschrägung 16 versehen ist. Diese Abschrägung 16 geht in einen an den Kern 9 anschließenden Steg 17 über. Hierdurch ist eine einfache Montagemöglichkeit in Form einer Einführhilfe gegeben, da das erfindungsgemäße Befestigungselement einfach von oben in eine Öffnung eines Trägers hineingedrückt wird und sich die spiralförmig gewundenen Flügel 4 so deformieren, bis der Abstand A gemäß Fig. 3 erreicht ist und sich die Dreiecksseiten 6 der Flügel hinter der Trägeröffnung befinden, wonach eine einwandfreie Verrastung gegeben ist, und zwar unabhängig von den Bohrungstoleranzen.

Es können beispielsweise insgesamt sechs Flügel 4 am Außenumfang des Kerns 9 des Einsetzteils 2 angeordnet sein. Diese Flügel können im oberen Bereich durch eine dünne Folie untereinander verbunden sein.

Das Verschlußteil 3 kann mit einer umlaufenden, zum Einsetzteil 2 geneigten Dichtlippe 11 versehen sein, wobei diese Dichtlippe 11 einen derartig großen Außenumfang aufweist, daß beispielsweise die Flügel 4 gemäß Fig. 4 weiträumig überragt werden.

Diese umlaufende Dichtlippe 11 schließt an einem vorzugsweise zylinderförmig ausgebildeten Bereich des Verschlußteil 3, an welcher seinerseits unterseitig die Radialstege 12, 13, 14 und 15 aufweist.

Nach Fig. 1 und 3 besteht die Möglichkeit, daß sich oberhalb des Verschlußteils 3 ein nicht näher dargestellter Halte- bzw. Befestigungsbereich 18 befindet, beispielsweise eine Rohrschelle, ein Eingriffsclip oder ein anders gestaltetes Element zum Befestigen eines Teils im Bereich einer Öffnung eines Trägers.

Infolge der besonderen Gestaltung der spiralförmig gewundenen Flügel 4 ergibt sich eine leichte Montage, d. h. es ist eine geringe Eindrückkraft beim Einsetzen des Befestigungsteils 1 in einer Trägeröffnung notwendig; die besonders ausgebildeten Flügel ermöglichen darüberhinaus vorteilhafterweise einen größeren Toleranzbereich hinsichtlich Blechstärke und Durchmesser der Öffnung des Trägers. Darüber hinaus ist auch die Demontierbarkeit auf einfache Weise möglich, da sich die elastischen Flügel infolge ihrer besonderen Gestaltung so verformen können, daß sich das erfindungsgemäße Befestigungselement ohne Schwierigkeiten aus der Öffnung eines Trägers herausheben oder z. B. durch Drehung in Steigungsrichtung herausdrehen läßt.

## Patentansprüche

1. Befestigungselement aus Kunststoff (1), mit einem in einer Öffnung eines Trägers befestigbaren Einsetzteil (2), welches am Außenumfang in Achslängsrichtung der Trägeröffnung verlaufende, über den Umfang verteilte, elastische Flügel (4) aufweist, die dreieckförmig ausgebildet sind, wobei eine Dreieckseite (7) mit einem Kern (9) des Einsetzteils (2) verbunden ist und die gegenüberliegende Dreieckspitze (8) jeweils eine zweite (5) und eine dritte (6), zur Dreieckspitze bzw. zum Kern (9) des Einsetzteils (2) zulaufende Dreieckseite begrenzt und mit einem mit dem Einsetzteil (2) im oberen Bereich verbundenen, die Trägeröffnung überdeckenden Verschlußteil (3),
**dadurch gekennzeichnet, daß** die Dreieckseite (7) mit dem kern (9) des Einsetzteils (2) in spiralförmigem Verlauf Verbunden ist, so daß die zweite Dreieckseite (5) des Flügels (4) bis zur Dreieckspitze (8) spiralförmig gewunden ansteigt und die dritte Dreieckseite (6) des Flügels (4) von der Dreieckspitze (8) bis zum Kern (9) des Einsetzteils (2) spiralförmig gewunden abfällt.

2. Befestigungselement nach Anspruch 1,
**dadurch gekennzeichnet, daß**
die Dreieckspitze (8) in eine Begrenzungskante (10) übergeht, an welche die zweite Dreieckseite (5) anschließt.

3. Befestigungselement nach Anspruch 1 und 2,
**dadurch gekennzeichnet, daß**
zwischen der dritten Dreieckseite (6) und der Unterseite des Verschlußteils (3) ein sich zum Kern des Einsetzteils (2) verringernder Abstand (A) vorliegt.

4. Befestigungselement nach Anspruch 3, wobei das Verschlußteil (3) mit einer umlaufenden, zum Einsetzteil (2) geneigten Dichtlippe (11) versehen ist,
**dadurch gekennzeichnet, daß**
das Verschlußteil (3) unterseitig mindestens zwei sich bis zum Kern (9) des Einsetzteils (2) erstreckende Radialstege (12, 13, 14, 15) aufweist.

5. Befestigungselement nach einem der vorhergehenden Ansprüche,
**dadurch gekennzeichnet, daß**
jeder Flügel (4) im Endbereich der zweiten Dreieckseite (5) mit einer Abschrägung (16) versehen ist.

6. Befestigungselement nach Anspruch 5,
**dadurch gekennzeichnet, daß**
die Abschrägung (16) in einen an den Kern (9) anschließenden Steg (17) übergeht.

7. Befestigungselement nach einem der vorhergehenden Ansprüche,
**dadurch gekennzeichnet, daß**
insgesamt sechs Flügel (4) an den Außenumfang des Kerns (9) des Einsetzteils (2) angeordnet sind.

8. Befestigungselement nach einem der vorhergehenden Ansprüche,
**dadurch gekennzeichnet, daß**
der Außenumfang der Dichtlippe das Profil der Flügel (4) überragt.

9. Befestigungselement nach einem der vorhergehenden Ansprüche,
**dadurch gekennzeichnet, daß**
sich oberhalb des Verschlußteils (2) ein Halte- und/oder Befestigungsbereich (18) befindet.

## Claims

1. Plastic fastening element (1), with an insert part (2) which can be fastened in an orifice of a carrier and which has circumferentially distributed elastic wings (4) of triangular design which run on the outer circumference in the direction of the longitudinal axis of the carrier orifice, one triangle side (7) being connected to a core (9) of the insert part (2), and the opposite triangle vertex (8) delimiting in each case a second triangle side (5) and a third triangle side (6) which run respectively to the triangle vertex and to the core (9) of the insert part (2), and with a closing part (3) connected to the insert part (2) in the upper region and covering the carrier orifice, characterized in that the triangle side (7) is connected to the core (9) of the insert part (2) spirally, so that the second triangle side (5) of the wing (4) ascends as far as the triangle vertex (8) in a spirally wound manner and the third triangle side (6) of the wing (4) descends from the triangle vertex (8) to the core (9) of the insert part (2) in a spirally wound manner.

2. Fastening element according to Claim 1, characterized in that the triangle vertex (8) merges into a delimiting edge (10) which the second triangle side (5) adjoins.

3. Fastening element according to Claims 1 and 2, characterized in that a clearance (A) decreasing towards the core of the insert part (2) is present between the third triangle side (6) and the underside of the closing part (3).

4. Fastening element according to Claim 3, the closing part (3) being provided with a peripheral sealing lip (11) inclined relative to the insert part (2), characterized in that the closing part (3) has, on the underside, at least two radial webs (12, 13, 14, 15) extending as far as the core (9) of the insert part (2).

5. Fastening element according to one of the preceding claims, characterized in that each wing (4) is provided with a bevel (16) in the end region of the second triangle side (5).

6. Fastening element according to Claim 5, characterized in that the bevel (16) merges into a web (17) adjoining the core (9).

7. Fastening element according to one of the preceding claims, characterized in that altogether six wings (4) are arranged on the outer circumference of the core (9) of the insert part (2).

8. Fastening element according to one of the preceding claims, characterized in that the outer circumference of the sealing lip projects beyond the profile of the wings (4).

9. Fastening element according to one of the preceding claims, characterized in that a holding and/or fastening region (18) is located above the closing part (2).

## Revendications

1. Elément de fixation (1) en matière plastique comprenant une partie insérable (2) pouvant être fixée dans une ouverture d'un support et présentant, sur le pourtour extérieur, des ailettes élastiques (4) qui s'étendent dans la direction de l'axe longitudinal de l'ouverture du support, sont réparties sur la périphérie et sont de réalisation triangulaire, un côté (7) du triangle étant relié à un noyau (9) de la partie insérable (2) et la pointe (8) du triangle, tournée à l'opposé, délimitant à chaque fois des deuxième (5) et troisième (6) côtés du triangle qui convergent, respectivement, vers la pointe du triangle ou vers le noyau (9) de la partie insérable (2) ; et une partie obturatrice (3) recouvrant l'ouverture du support et reliée à la partie insérable (2) dans la région supérieure,
caractérisé par le fait que
le côté (7) du triangle est relié au noyau (9) de la partie insérable (2) selon une allure spiroïdale, de façon telle que le deuxième côté (5) du triangle de l'ailette (4) monte avec torsion spiroïdale jusqu'à la pointe (8) du triangle, et que le troisième côté (6) du triangle de l'ailette (4) descende avec torsion spiroïdale depuis la pointe (8) du triangle jusqu'au noyau (9) de la partie insérable (2).

2. Elément de fixation selon la revendication 1,
caractérisé par le fait que
la pointe (8) du triangle fusionne dans une arête de délimitation (10) à laquelle se rattache le deuxième côté (5) du triangle.

3. Elément de fixation selon les revendications 1 et 2,
caractérisé par la présence,
entre le troisième côté (6) du triangle et la face inférieure de la partie obturatrice (3), d'une distance (A) s'amenuisant vers le noyau de la partie insérable (2).

4. Elément de fixation selon la revendication 3, dans lequel la partie obturatrice (3) est munie d'une lèvre périphérique d'étanchement (11) inclinée vers la partie insérable (2),
caractérisé par le fait que
la partie obturatrice (3) présente, à la face inférieure, au moins deux membrures radiales (12, 13, 14, 15) s'étendant jusqu'au noyau (9) de la partie insérable (2).

5. Elément de fixation selon l'une des revendications précédentes,
caractérisé par le fait que
chaque ailette (4) est pourvue d'un biseau (16) dans la région extrême du deuxième côté (5) du triangle.

6. Elément de fixation selon la revendication 5,
caractérisé par le fait que
le biseau (16) fusionne dans une nervure (17) se rattachant au noyau (9).

7. Elément de fixation selon l'une des revendications précédentes,
caractérisé par le fait que
six ailettes (4) sont disposées, au total, sur le pourtour extérieur du noyau (9) de la partie insérable (2).

8. Elément de fixation selon l'une des revendications précédentes,
caractérisé par le fait que
le pourtour extérieur de la lèvre d'étanchement dépasse au-delà du profil des ailettes (4).

9. Elément de fixation selon l'une des revendications précédentes,
caractérisé par le fait
qu'une zone (18) de retenue et/ou de fixation se trouve au-dessus de la partie obturatrice (2).
